# EUROPEAN PATENT APPLICATION

(11) **EP 4 763 629 A1**
(43) Date of publication of application: **24.06.2026**
(21) Application number: 24222286.7
(22) Date of filing: 20.12.2024
(51) Int. Cl.: B60R 16/03, B60R 16/02, B60R 16/033, B60R 16/023

(54) **AUTOMOTIVE ELECTRICAL AND ELECTRONIC SYSTEM**

(71) Applicant: Aptiv Technologies AG, 8200 Schaffhausen (CH)
(72) Inventor: YOUSEF, Sebastian, 44795 Bochum (DE); FUCHS, Andreas, 51067 Köln (DE)
(74) Representative: Manitz Finsterwald Patent- und Rechtsanwaltspartnerschaft mbB

(57) **Abstract**

The present disclosure is directed at an automotive electrical and electronic system comprising a plurality of power and data center (PDC) nodes, the PDC nodes each including at least one sensor interface and at least one data interface, a central power distribution unit coupled to at least one power source or source system, wherein the sensor interface is configured to receive sensor data from one or more sensors, the data interface is configured to transmit the sensor data to the central power distribution unit, and the central power distribution unit is coupled to the PDC nodes and is configured to supply power to each of the PDC nodes and to receive sensor data from the PDC nodes.

## Description

### FIELD

The present disclosure relates to an automotive electrical and electronic system.

### BACKGROUND

Current vehicles often have dedicated units for data communication and power distribution. These units may consume an increasing amount of vehicle space and increase the complexity of wiring harness routings. New approaches of vehicle system architectures use zonal or decentralized topologies which may replace the classical centralized domain-centric vehicle architectures.

In addition, there is a rising demand for introducing redundant power supply rails within one vehicle for realizing highly automated driving functions and achieving safety features with high availability. However, the foundation of redundant and highly available features and functions cannot be introduced with cost and space efficient implementation, since the needed and complex circuitry and diagnosis strategies are missing.

Accordingly, there is a need to an improved automotive electrical and electronic system which is less complex, easier to integrate and cost-effective.

### SUMMARY

The present disclosure provides an automotive electrical and electronic system according to the independent claim. Embodiments are given in the sub-claims, the description and the drawings.

The present disclosure is directed at an automotive electrical and electronic system comprising a plurality of power and data center (PDC) nodes, the PDC nodes each including at least one sensor interface and at least one data interface, a central power distribution unit coupled to at least one power source or source system, wherein the sensor interface is configured to receive sensor data from one or more sensors, the data interface is configured to transmit the sensor data to the central power distribution unit, and the central power distribution unit is coupled to the PDC nodes and is configured to supply power to each of the PDC nodes and to receive sensor data from the PDC nodes.

Instead of distributing functions distributed across multiple Electronic Control Units (ECUs) located throughout a vehicle, those are consolidated into a smaller set of PDC nodes which act as domain controllers. In this way, while maintaining or even increasing computing capabilities, the vehicle may shed multiple microcontrollers, multiple power supplies, multiple housings, and copper wiring. This results in a significant reduction in weight for the wiring harnesses and computing units and a reduction in packaging space for computing units. In addition, the provision of PDC nodes as domain controllers also cuts costs through direct labor reduction during production of the vehicle. For example, because the PDC nodes simplify the physical complexity and connect directly to the sensors, wiring harnesses can be limited in length which significantly reduces the man power demands during integration of the wiring harnesses.

The sensor interfaces and data interfaces of the PDC nodes can handle the communication with the vehicle's end devices via a controller area network (CAN) or local interconnect network (LIN) bus to the specific ECUs or body control-related sensors and actuators, Ethernet or low-voltage differential signaling (LVDS) interfaces to cameras or other advanced driver-assistance systems (ADAS) sensors. The PDC nodes then aggregate those signals onto Ethernet or PCI Express for the high-bandwidth ADAS sensors or onto CAN-FD (CAN-flexible data-rate) for lower-bandwidth body control functions.

The central power distribution unit comprises a plurality of communication interfaces to communicate with the PDC nodes. Communication, data management and data exchange between the central power distribution unit and the PDC nodes may be accomplished using communication protocols like for example CAN, LIN and Ethernet. The central power distribution unit may be seen as main distribution box supplying power to the PDC nodes, but having additional data management capabilities for receiving sensor data. Ethernet may be used for the data throughput and data management tasks of the central power distribution unit.

The system comprising a central power distribution unit equipped with power supply and data management capabilities is less complex, easier to integrate and cost-effective.

According to an embodiment, the system further comprises a central computing platform, wherein the central power distribution unit is coupled to the central computing platform, the central power distribution unit is configured to supply power to the central computing platform, and the central power distribution unit is configured to transmit the sensor data to the central computing platform. Whereas the PDC nodes act as domain controllers, the central computing platform acts as controller of Smart Vehicle Architecture (SVA) or Software-Defined Vehicle (SDV) related functions. As such, the central computing platform analyzes the received sensor data and decides about possible actions to take. If a decision has been taken, the decision is transmitted to the PDC nodes which handle the communication with the respective end devices within the vehicle. In addition, the central computing platform may also be configured to store at least a part of the received sensor data. By combining data and power management, the system protects energy resources and saves vehicle installation space. Distributing both data communication and energy through the vehicle's wiring harness to the PDC nodes and attached loads reduces the number of required wiring harness routings, leading to a weight reduction and a simplified and more cost-effective integration of the vehicle.

According to an embodiment, the central power distribution unit is coupled to at least two different power sources or source systems. This ensures a redundant power supply and a continuous power supply in case one of the power sources or source systems fails or is damaged. The system may employ a redundant power supply management, in particular utilizing two independent power supplies providing sufficient FFI (Freedom From Interference).

According to an embodiment, the at least two different power sources or source systems include a battery and a DCDC source. The DCDC source may be located in a different part of the vehicle than the battery. This enhances the redundancy of the system, in particular in case of an accident in which only some parts of the vehicle are damaged while other parts are unaffected by the accident. Having the ability for providing the power sources or source systems at different locations therefore further improves the redundancy of the system.

According to an embodiment, the central power distribution unit is a plug-in card configured to be plugged into the central computing platform. This embodiment follows a scalable design approach, where a base board comprising the central computing platform is enhanced by a power supply board for safe and, in particular redundant, power supply for automotive loads and the base board itself. Connection between the central power distribution unit and the central computing platform may be established over board to board connectors. The central power distribution unit and the central computing platform take care of both data distribution and power distribution tasks, but do not need to be combined over, in particular separate, communication interfaces to synchronize each other for specific functions within the vehicle.

According to an embodiment, the central power distribution unit is fixedly attached, in particular by soldering, to the central computing platform to form at least one system in a package (SiP). A SiP comprises a number of integrated circuits enclosed in one chip carrier package or encompassing an integrated circuit package substrate. The integrated circuits may be stacked using package on package, placed side by side, and/or embedded in the substrate. Like in the previous embodiment, a base board comprising the central computing platform is enhanced by a power supply unit for safe and, in particular redundant, power supply for automotive loads and the base board itself. The attachment of the central power distribution unit to the central computing platform may be established by solder connections. Like in the previous embodiment, the central power distribution unit and the central computing platform take care of both data distribution and power distribution tasks, but do not need to be combined over, in particular separate, communication interfaces to synchronize each other for specific functions within the vehicle.

According to an embodiment, the central power distribution unit and the central computing platform are enclosed in a single housing. Data and power management are therefore combined in a single standalone box, allowing a reduction of wiring harness routings and packaging space Therefore, while saving vehicle installation space, installation of the combined central power distribution unit and the central computing platform is also made easier and less time consuming. Vehicle production is made more efficient and cost-effective since the installation of the wiring harness is simplified and an item has to be integrated less during production of the vehicle.

According to an embodiment, the central power distribution unit is provided with 12V, 24V and 48V voltage capabilities. In vehicles, still the traditional 12V standard is often used for the electrical components. Also 24V may be used for some of the vehicle's electrical components. In recent times, 48V systems are becoming more popular since they provide a number of benefits like, for example an improvement of the smoothness of a hybrid vehicle's auto-start/stop function. A 48V system allows vehicles to power major electrical components more efficiently than a combustion engine could. A 48 V system also reduces energy loss as it delivers the same electrical power but with much less current, and the lower the current, the less power is lost due to the resistance inherent in the conductors. In previous attempts, two separate systems were provided each with their own power source, one operating at 12V for older legacy components within a vehicle and the other power sources operating at 48V for the newer connections. The central power distribution unit simplifies this approach, as it is configured to deliver 48V to the components that are ready for it, but also to provide power at 12V for those components that are not. In this way, it can be avoided that all of the motors and other electrical components in a vehicle have to be migrate at once from 12V to 48V. Instead, one might choose to migrate just the components or functions to 48V which require the most power, but leave all other components at 12V or less. The central power distribution unit is configured to handle the conversion as needed. The ability of the central power distribution unit to deliver 12V, 24V and 48V outputs therefore contributes both to a weight reduction and to a cost reduction in the production of the vehicle.

According to an embodiment, the central power distribution unit is connected to the power source via a protection element, in particular an electronic fuse. Low voltage batteries like lead battery or Lithium ion batteries need a direct protection component like melting fuses to the respective positive electrodes, so that short circuits in the wiring harness can be mitigated to avoid a thermal event. For this reason, main power distribution boxes with classical melting fuses and relays are usually placed adjacent to a low voltage battery in the vehicle's engine compartment. The central power distribution unit may not be located in the engine compartment but close to the central computing platform in the vehicle's passenger compartment and therefore remote from the power source and its related melting fuse. Electronic fuses, on the other hand, have not to be placed near to the power source, but can protect the respective power source remotely via dedicated circuits, enabling a fast fault isolation for example in less than 100 µs. In this way, electronic fuses may replace relays and standard fuses and may also provide additional protection and diagnostic functions. For example, an electronic fuse can detect when the wire attached to it is close to failing and pass that information back to a central system. This kind of predictive maintenance may for example help drivers address potential problems before they affect vehicle operation.

According to an embodiment, the connection between the central power distribution unit and the protection element is a 10BASE-T1S-Ethernet connection or an Ethernet connection according to the remote-control protocol (RCP). The central power distribution unit may have a connection to an external fusing box comprising a single fuse controlled over e.g. 10BASE-T1S or RCP. Supply and communication to this single fuse may be done over two wire pairs and no extra microcontroller would be needed. The protection element is located in the engine compartment of the vehicle. Monitoring current and controlling the protection element for power source protection can be achieved in ASIL-B and/or ASIL-C compliance without the need of placing the central power unit directly into the engine compartment.

According to an embodiment, the system further comprises at least a further central power distribution unit and a further central computing platform, wherein the further central power distribution unit is coupled to a further plurality of PDC nodes different from the plurality of PDC nodes, the further central power distribution unit is configured to supply power to each of the PDC nodes of the further plurality of PDC nodes, the further central power distribution unit is coupled to at least one further power source different from the at least one power source, the further central power distribution unit is coupled to the further central computing platform, the further central power distribution unit is configured to supply power to the further central computing platform, the further central power distribution unit is configured to transmit the sensor data of each of the PDC nodes of the further plurality of PDC nodes to the further central computing platform, and the central power distribution unit and the further central power distribution unit are connected via at least one network separator, in particular a Hardware Network Separator (HNS). The network separator may be a separate device connecting the central power distribution unit and the further central power distribution unit. Alternatively, a network separator may be integrated in the respective central power distribution units, such that each combination of central power distribution unit and central computing platform is provided with a network separator. The network separator enables a connection with sufficient FFI between the central power distribution unit and the further central power distribution unit. This allows a redundant power supply management with FFI between two different power sources like DCDC and battery. The system is therefore scalable with additional central power distribution units being added according to the vehicle's demands, each of the additional central power distribution units being coupled to related additional central computing platforms and additional power sources. This scalability ensures the availability of higher power supply demands while simultaneously reducing wiring cross sections and production costs. If a failure is detected in one of the central power distribution units, the network separator disconnects said central power distribution unit from the system. In this way it is ensured that the central power distribution units still working and their connected PDC nodes and related functions are maintained and still can work nominally.

According to an embodiment, the central power distribution unit is located in a non-harsh environment, in particular in a passenger compartment of a vehicle. By omitting a harsh environment, housing requirements for the central power distribution unit can be reduced, further reducing production costs. Furthermore, it allows to locate the central power distribution unit at the same place or close to the central computing platform which may be centrally located in the passenger compartment of the vehicle. The central computing platform is not intended to be integrated in a harsh environment since its routed high-speed cables are not foreseen to be placed in front of a vehicle's firewall. Thus, an integration of the central computing platform and also the central power distribution unit in a non-harsh environment, in particular the vehicle's passenger compartment, is preferred.

According to an embodiment, the system further includes a secure connected gateway or another type of firewall configured to protect the central power distribution unit. In contrast to previous attempts, the central power distribution unit is therefore located behind a firewall and not in front of a firewall. The secure connected gateway or the firewall may include hardware and software for securely managing cloud and peer-to-peer connectivity of the vehicle with various data services, including over-the air software update services, tele operator/remote control services, data analytics services, map database services, localization services, entertainment services, security services, and original equipment manufacturer services. The secure connected gateway or the firewall may also securely manage peer-to-peer connectivity with other vehicles, city infrastructure, roadside beacons, home networks, and the like.

According to an embodiment, the central computing platform is provided with over-the-air (OTA) transmission capabilities. By OTA; the central computing platform may receive software updates remotely and instantaneously whenever a software update is imminent, enhancing the safety of the automotive system. The software updates may be provided, for example, via a cloud-based server.

According to an embodiment, the central power distribution unit is configured to treat high current throughputs up to 100A, in particular up to 200 A. The central power distribution unit is therefore capable to treat also high loads of specific vehicle functions.

### DRAWINGS

Exemplary embodiments and functions of the present disclosure are described herein in conjunction with the following drawings, showing schematically:
- Fig. 1: Vehicle equipped with an embodiment of the automotive electrical and electronic system
- Fig. 2: Central power distribution unit of another embodiment of the automotive electrical and electronic system
- Fig. 3: Architectural design of the embodiment of the automotive electrical and electronic system of Fig. 1
- Fig. 4A: Architectural design of still another embodiment of the automotive electrical and electronic system
- Fig. 4B: The embodiment of Fig. 4A in a failure mode under control

### DETAILED DESCRIPTION

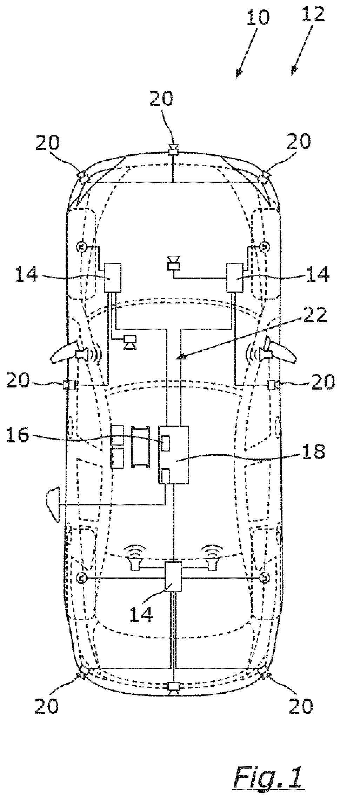

Fig. 1 depicts a schematic view of a vehicle 10 equipped with an embodiment of the automotive electrical and electronic system 12. The system 12 comprises a plurality of power and data center (PDC) nodes 14, a central power distribution unit 16 and a central computing platform 18. The PDC nodes 14 each include a sensor interface and a data interface. The sensor interface is configured to receive sensor data from a plurality of sensors 20. The data interface is configured to transmit the sensor data to the central power distribution unit 16. The sensors 20 include for example sensors monitoring the exterior of the vehicle 10 like cameras, radar devices or LiDAR, but also vehicle intrinsic sensors. The central power distribution unit 16 is coupled to not shown power sources, and is furthermore coupled to each of the PDC nodes 14.

The PDC nodes 14 act as domain controllers, thereby communicating via their sensor interfaces and data interfaces with the vehicle's 10 end devices. Power supply of the PDC nodes 14 is provided by the central power distribution unit 16. Sensor data received by the sensor interfaces is transmitted by the respective data interfaces to the central power distribution unit 16.

The central power distribution unit 16 is furthermore coupled to the central computing platform 18, thereby supplying power to the central computing platform 18 and transmitting the received sensor data to the central computing platform 18.

Whereas the PDC nodes 14 act as domain controllers, the central computing platform 18 acts as controller of Smart Vehicle Architecture (SVA) or Software-Defined Vehicle (SDV) related functions. As such, the central computing platform 18 analyzes the received sensor data and decides about possible actions to take. If a decision has been taken, the decision is transmitted to the PDC nodes 14which handle the communication with the respective vehicle's 10 end devices.

The central power distribution unit 16 and the central computing platform 18 are enclosed in a single housing being placed in the passenger compartment of the vehicle 10. The central power distribution unit 16 may be formed as a plug-in card configured to be plugged into the central computing platform 18. Alternatively, the central power distribution unit 16 may be fixedly attached, in particular by one or more solder connections, to the central computing platform 18 to form at least one system in a package (SiP).

By combining data and power management, the automotive system 12 protects energy resources and saves vehicle installation space. Distributing both data communication and energy through the vehicle's 10 wiring harness 22 to the PDC nodes 14 and attached loads reduces the number of required wiring harness 22 routings, leading to a weight reduction and a simplified and more cost-effective integration of the vehicle 10.

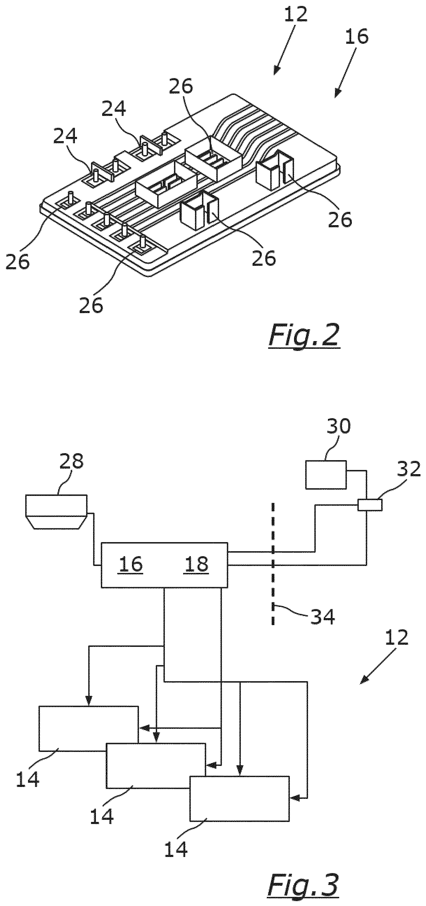

Fig. 2 depicts a schematic view of a central power distribution unit 16 of another embodiment of the automotive electrical and electronic system 10. In this embodiment, the central power distribution unit 16 is not integrated with the central computing platform 18 in a single housing, but is provided as a standalone box. The central power distribution unit 16 comprises a plurality of connector ports 24 for connecting the central power distribution unit 16 to a plurality of power sources which may include a battery and a DCDC source. The central power distribution unit 16 is provided with 12V, 24V and 48V voltage capabilities and is capable of treating high current throughputs up to 100A, in particular up to 200 The central power distribution unit 16 furthermore comprises a plurality of interfaces for supplying power to the PDC nodes 14 and for receiving data from the PDC nodes 14. Communication, data management and data exchange between the central power distribution unit 16 and the PDC nodes14 may be accomplished using communication protocols like for example CAN-FD, LIN and Ethernet.

Fig. 3 depicts a schematic architectural design of the embodiment of the automotive electrical and electronic system of Fig. 1. The central power distribution unit 16 and the central computing platform 18 are enclosed in a single housing being placed in the passenger compartment of the vehicle 10. The central power distribution unit 16 is coupled to each of the PDC nodes 14, thereby supplying power to the PDC nodes 14, but also receiving sensor data from the PDC nodes 14. The central power distribution unit 16 is connected to a DCDC source 28 and a battery 30. This ensures a redundant power supply and a continuous power supply in case one of the power sources 28, 30 fails or is damaged. The automotive system 10 therefore employs a redundant power supply management which may ensure FFI (Freedom From Interference) between the different power sources 28, 30 according to functional safety principles.

The central power distribution unit 16 is connected to the battery 30 via a protection element 32 which in this case is an electronic fuse. The electronic fuse 32 is controlled over a 10BASE-T1S-Ethernet connection which can achieve a monitoring of the current and a control of the electronic fuse 32 in ASIL-B and/or ASIL-C compliance. The central power distribution unit 16 and the central computing platform 18 are placed behind a firewall 34. The firewall 34 includes hardware and software for securely managing cloud and peer-to-peer connectivity of the vehicle with various data services, including for example over-the air (OTA) software update services directed at the central computing platform18.

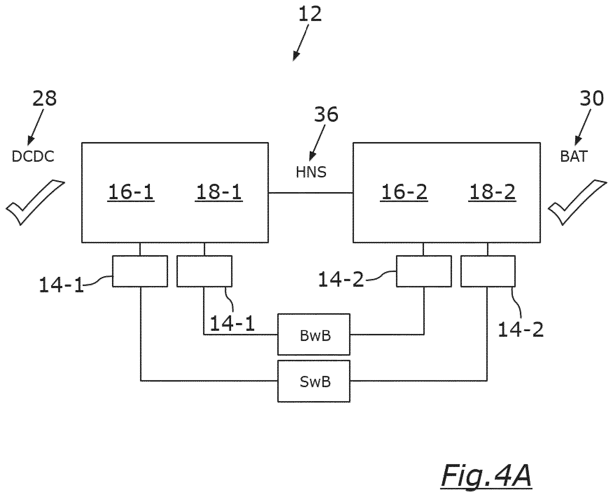

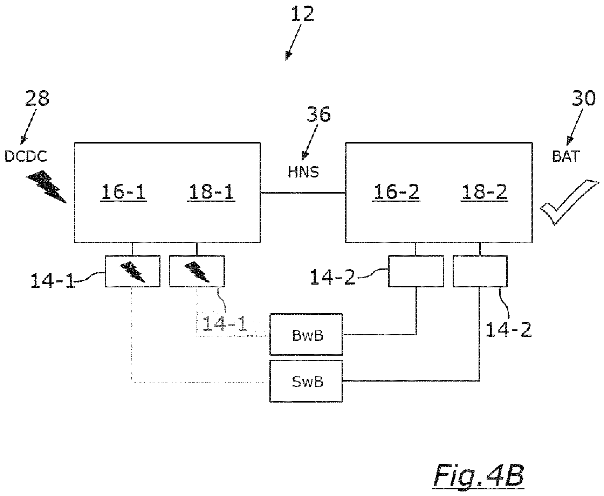

Figs. 4A and 4B depict a schematic architectural design of still another embodiment of the automotive electrical and electronic system 12. In this embodiment, two sets of central power distribution units 16-1, 16-2 and central computing platforms 18-1, 18-2 are provided. Each of the sets (16-1, 18-1) and (16-2, 18-2) is enclosed in a single housing comprising the respective central power distribution units and central computing platforms. The two sets are coupled to different power sources, with the set (16-1, 18-1) being connected to a DCDC source 28 and the set (16-2, 18-2) being connected to a battery 30. The system 12 may provide power to attached ASIL-D loads and vehicle functions like for example Steer-by-Wire (SbW) or Brake-by-Wire (BbW), whereby the SbW and BbW systems are supplied from both power rails to enhance redundancy. SbW and BbW usually comprise two independent electronic devices working on the same mechanical actors with each of the electronic devices being powered independently. The central power distribution units 16-1 and 16-2 of the respective sets are connected via a network separator 36, for example a Hardware Network Separator (HNS). The network separator may be a separate device connecting the central power distribution unit 16-1 and the further central power distribution unit 16-2. Alternatively, a network separator may be integrated in the respective central power distribution units 16-1, 16-2, such that each set of central power distribution unit and central computing platform is provided with a network separator. The network separator 36 ensures FFI between the central power distribution units 16-1 and 16-2 in case of failures. This allows a redundant power supply management with FFI between two different power sources like DCDC 28 and battery 30.

Fig. 4A shows the system in a failure-free state with both central power distribution units 16-1,16-2 working nominally. Fig. 4B shows the system in a failure mode under control, with a fault in the power rail comprising the central power distribution unit 16-1 and the DCDC source 28. The fault in the power rail causes a power cut, indicated by dashed lines, of the connected PDC nodes 14-1 and attached loads. As the failure is detected in the central power distribution unit 16-1, the network separator 36 disconnects said central power distribution unit from the automotive system 12. The network separator 36 ensures that no current is flowing between the power rails in case of a failure. In this way it is ensured that the still working central power distribution unit and the related PDC nodes and functions are not affected and maintained and still can work nominally. Thus, despite a fault in one of the power rails, the SbW and BbW systems still have power to operate.

By applying more sets of central power distribution units 16 and central computing platforms 18, the automotive system 12 is scalable with additional sets being added according to the vehicle's 10 demands. This scalability ensures the availability of higher power supply demands while simultaneously reducing wiring cross sections and production costs.

### Reference numeral list

- 10: Vehicle
- 12: Automotive electrical and electronic system
- 14: Power and data center (PDC) node
- 14-1: Power and data center (PDC) node
- 14-2: Power and data center (PDC) node
- 16: Central power distribution unit
- 16-1: Central power distribution unit
- 16-2: Central power distribution unit
- 18: Central computing platform
- 18-1: Central computing platform
- 18-2: Central computing platform
- 20: Sensor
- 22: Wiring harness
- 24: Connector port
- 26: Interface
- 28: DCDC source
- 30: Battery
- 32: Protection element / electronic fuse
- 34: Firewall
- 36: Network separator

## Claims

1. An automotive electrical and electronic system (12) comprising:
a plurality of power and data center, PDC, nodes (14), the PDC nodes (14) each including at least one sensor interface and at least one data interface,
a central power distribution unit (16) coupled to at least one power source or source system (28, 30), wherein
the sensor interface is configured to receive sensor data from one or more sensors (20),
the data interface is configured to transmit the sensor data to the central power distribution unit (16), and
the central power distribution unit (18) is coupled to the PDC nodes (14) and is configured to supply power to each of the PDC nodes (14) and to receive sensor data from the PDC nodes (14).

2. The system (12) of claim 1, further comprising a central computing platform (18), wherein
the central power distribution unit (16) is coupled to the central computing platform (18),
the central power distribution unit (16) is configured to supply power to the central computing platform (18), and
the central power distribution unit (16) is configured to transmit the sensor data to the central computing platform (18).

3. The system (12) of claim 1 or 2, wherein the central power distribution unit (16) is coupled to at least two different power sources (28, 30) or source systems (28, 30).

4. The system (12) of claim 3, wherein the at least two different power sources or source systems include a battery (28) and a DCDC source (30).

5. The system (12) of any one of claims 2 to 4, wherein the central power distribution unit (16) is a plug-in card configured to be plugged into the central computing platform (18).

6. The system (12) of any one of claims 2 to 4, wherein the central power distribution unit (16) is fixedly attached, in particular by soldering, to the central computing platform (18) to form at least one system in a package (SiP).

7. The system (12) of any one of claims 2 to 6, wherein the central power distribution unit (16) and the central computing platform (18) are enclosed in a single housing.

8. The system (12) of any one of the preceding claims, wherein the central power distribution unit (16) is provided with 12V, 24V and 48V voltage capabilities.

9. The system (12) of any one of the preceding claims, wherein the central power distribution unit (16) is connected to the power source (28, 30) via a protection element (32), in particular an electronic fuse.

10. The system (12) of claim 9, wherein the connection between the central power unit (16) and the protection element (32) is a 10BASE-T1S-Ethernet connection or an Ethernet connection according to the remote-control protocol, RCP.

11. The system (12) of any one of claims 2 to 10, further comprising at least a further central power distribution unit (16-2) and a further central computing platform (18-2), wherein
the further central power distribution unit (16-2) is coupled to a further plurality of PDC nodes (14-2) different from the plurality of PDC nodes (14-1),
the further central power distribution unit (16-2) is configured to supply power to each of the PDC nodes (14-2) of the further plurality of PDC nodes,
the further central power distribution unit (16-2) is coupled to at least one further power source (30) different from the at least one power source (28),
the further central power distribution unit (16-2) is coupled to the further central computing platform (18-2),
the further central power distribution unit (16-2) is configured to supply power to the further central computing platform (18-2),
the further central power distribution unit (16-2) is configured to transmit the sensor data of each of the PDC nodes (14-2) of the further plurality of PDC nodes to the further central computing platform (18-2), and
the central power distribution unit (16-1) and the further central power distribution unit (16-2) are connected via at least one network separator (36), in particular a Hardware Network Separator, HNS.

12. The system (12) of any one of the preceding claims, wherein the power distribution unit (16) is located in a non-harsh environment, in particular in a passenger compartment of a vehicle (10).

13. The system (12) of any one of the preceding claims, further including a secure connected gateway (34) or another type of firewall (34) configured to protect the central power distribution unit (16).

14. The system (12) of any one of the preceding claims, wherein the central computing platform (18) is provided with over-the-air, OTA, transmission capabilities.

15. The system (12) of any one of the preceding claims, wherein the central power distribution unit (16) is configured to treat high current throughputs up to 100A, in particular up to 200 A.
